Europäisches Patentamt

(19) European Patent Office

Office européen des brevets

(11) Numéro de publication : **0 031 774**
**B1**

(12) **FASCICULE DE BREVET EUROPÉEN**

(45) Date de publication du fascicule du brevet :
24.04.85

(21) Numéro de dépôt : **80401842.2**

(22) Date de dépôt : **22.12.80**

(51) Int. Cl.⁴ : **H 04 L 27/00**

(54) **Procédé de modulation à seize états du type MAMSK pour système de transmission de données numériques et modulateurs et démodulateur.**

(30) Priorité : **31.12.79 FR 7932167**

(43) Date de publication de la demande :
**08.07.81 Bulletin 81/27**

(45) Mention de la délivrance du brevet :
**24.04.85 Bulletin 85/17**

(84) Etats contractants désignés :
**DE GB NL SE**

(56) Documents cités :
**US-A- 3 204 029**
**IEEE TRANSACTIONS ON COMMUNICATIONS, vol. COM-26, no. 5, mai 1978 NEW YORK (US) WEBER et al.: "A bandwidth compressive modulation system using multi-amplitude minimum shift keying (MAMSK)", pages 543-551**

(73) Titulaire : **L'Etat Français représenté par le Secrétaire d'Etat aux Postes et Télécommunications et à la
Télédiffusion
(Centre National d'Etudes des Télécommunications)
38-40 rue du Général Leclerc
F-92131 Issy-les-Moulineaux (FR)**

**Etablissement Public de Diffusion dit "Télédiffusion
de France"
21-27 rue Barbès
F-92120 Montrouge (FR)**

(72) Inventeur : **Pommier, Daniel
Groupe Scolaire de Mordelles
F-35310 Mordelles (FR)**
Inventeur : **Veillard, Jacques
"La viseule"
F-35760 Montgermont Saint-Grégoire (FR)**

(74) Mandataire : **Le Guen, Louis François
13, rue Emile Bara BP 91
F-35802 Dinard Cedex (FR)**

EP 0 031 774 B1

Jouve, 18, rue St-Denis, 75001 Paris, France

## Description

La présente invention concerne des modulateurs utilisables dans des systèmes de transmission de données numériques à modulation de phase et d'amplitude à nombre donné d'états qui sont obtenus par l'addition de deux signaux en quadrature qui résultent de modulation d'amplitude à niveaux donnés équidistants. Suivant la terminologie américaine, les modulateurs, suivant l'invention, sont prévus pour une modulation MAMSK (Multi Amplitude Minimum Shift Keying) dans laquelle les enveloppes des composantes du signal modulé sont sinusoïdales et décalées de la durée d'un demi symbole.

Dans les modulateurs connus pour modulation MAMSK, on obtient cette modulation en superposant en quadrature deux modulations à 2N états d'amplitude. La mise en forme des enveloppes est effectuée, sur chacune des voies, soit avant, soit après modulation. La démodulation s'effectue séparément sur chacune des composantes du signal haute fréquence.

Un objet de la présente invention consiste à prévoir des modulateurs pour modulation MAMSK de structure plus simple que celle des modulateurs existants.

Suivant une caractéristique de l'invention, il est prévu une modulation MAMSK simplifiée par filtrage linéaire d'une modulation à quatre états d'amplitude à enveloppe rectangulaire.

Dans le modulateur décrit dans la demande de brevet français déposée par les présents demandeurs le 6 juin 1978 sous le n° 7 817 419, on a décrit un modulateur pour modulation MSK comprenant un modulateur cohérent à deux états de phase suivi d'un filtre qui engendre la deuxième dimension de l'espace des signaux émis. Dans le modulateur de l'invention, le filtre linéaire transforme la modulation à quatre états en une modulation à seize états. En fait la propriété du filtre utilisé peut être généralisée pour une modulation d'amplitude à 2N états. La démodulation du signal, qui a été obtenu par cette modulation MAMSK simplifiée, peut encore être effectuée sur une seule dimension. La modulation apparaît alors comme résultant d'un filtrage à bande latérale atténuée d'une modulation d'amplitude à 2N états.

On sait, d'après l'article intitulé « A Bandwidth Compressive Modulation System Using Multi-Amplitude Minimum Shift Keying (MAMSK) » par W.J. Weber, P.H. Stanton et J.T. Sumida, paru dans la revue américaine « IEEE Transactions on Communications », mai 1978, pages 543 à 551, que l'expression générale d'une modulation MAMSK, pour N = 2, est donnée par l'expression suivante :

$$Y(t) = A \sum_{k=-\infty}^{+\infty} \alpha_{2k} R_2(t - 2kT) \sin\frac{\pi t}{2T} \sin(2\pi f_c t + \psi) +$$

$$+ \alpha_{2k-1} R_2(t - (2k-1)T) \cos\frac{\pi t}{2T} \cos(2\pi f_c t + \psi) \qquad (1)$$

avec :

$R_2(t) = 1$, si $t \in [-T, T]$

$R_2(t) = 0$, si $t \notin [-T, T]$

$2T$ = durée d'un symbole (quatre éléments binaires)

$\alpha_{2K}$ et $\alpha_{2K-1}$ = amplitudes des composantes

$f_c$ = fréquence de la porteuse

$\psi$ = phase à l'origine de la porteuse

Dans le cas d'une modulation à seize états, on a :

$$\alpha_{2k} = a_{2k} + 1/2\, b_{2k}$$

$$\alpha_{2k-1} = a_{2k-1} + 1/2\, b_{2k-1}$$

où $a_n$ et $b_n$ prennent les valeurs $\pm 1$ et correspondent, après codage, à la mise en parallèle sur deux voies du signal binaire à transmettre. Ce codage ne fait pas partie du domaine de la présente invention.

Suivant l'invention, on décompose, dans le cas d'une modulation à seize états, l'expression (1) sous la forme de deux modulations MSK d'amplitudes respectives A et A/2, soit :

$$V_s(t) = A \sum_{k=-\infty}^{+\infty} a_{2k} R_2(t - 2kT) \sin\frac{\pi t}{2T} \sin(2\pi f_c t + \psi) +$$

$$+ a_{2k-1} R_2(t - (2k-1)T) \cos\frac{\pi t}{2T} \cos(2\pi f_c t + \psi)$$

$$+ A/2 \sum_{k=-\infty}^{+\infty} b_{2k} R_2(t - 2kT) \sin\frac{\pi t}{2T} \sin(2\pi f_c t + \psi)$$

$$+ b_{2k-1} R_2(t - (2k-1)T) \cos\frac{\pi t}{2T} \cos(2\pi f_c t + \psi) \qquad (2)$$

Suivant l'invention, chacune de ces modulations MSK, selon l'expression (2), est obtenue par filtrage linéaire d'une modulation à deux états de phase, de débit 1/T et de fréquence f1, telle que :

$$f1 = f_c - 1/4\,T \tag{3}$$

le filtre ayant pour réponse impulsionnelle une sinusoïde de fréquence f2, telle que :

$$f2 = f_c + 1/4\,T \tag{4}$$

dans l'intervalle O,T.

En particulier, suivant l'invention, on obtient exactement une modulation MSK si, à la modulation biphase cohérente représentée par :

$$V_1(t) = \sum_{n=-\infty}^{+\infty} a_n \cos 2\,\pi f_1\, t R_1(t - nT) \tag{5}$$

avec :

$$R_1(t) = 1\,, \qquad \text{si} \qquad t \in [-\,T, T]$$
$$R_1(t) = 0\,, \qquad \text{si} \qquad t \notin [-\,T, T]$$

on associe le filtre de réponse impulsionnelle h(t), telle que :

$$h(t) = \frac{1}{T}\sin 2\,\pi f_2\, t\,, \quad \text{avec} \ \ 0 < t < T\,, \ \ \text{et} \ \ f_1 = \frac{N}{2\,T} \ \ \text{et} \ \ f_2 = \frac{N+1}{2\,T}\,.$$

Il faut noter que, lorsque N est grand devant l'unité, la modulation MSK est obtenue en absence de cohérence de phase entre $V_1(t)$ et h(t).

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la figure 1 est le bloc-diagramme d'un premier exemple de modulateur suivant l'invention,
les figures 2 et 3 sont des blocs-diagrammes de variante du modulateur de la fig. 1,
la figure 4 est un diagramme servant à illustrer le fonctionnement des modulateurs des fig. 1 à 3,
la figure 5 représente le spectre d'un signal délivré par l'un des modulateurs des fig. 1 à 3,
la figure 6 est le diagramme de la partie modulation proprement dite, d'un modulateur suivant l'invention,

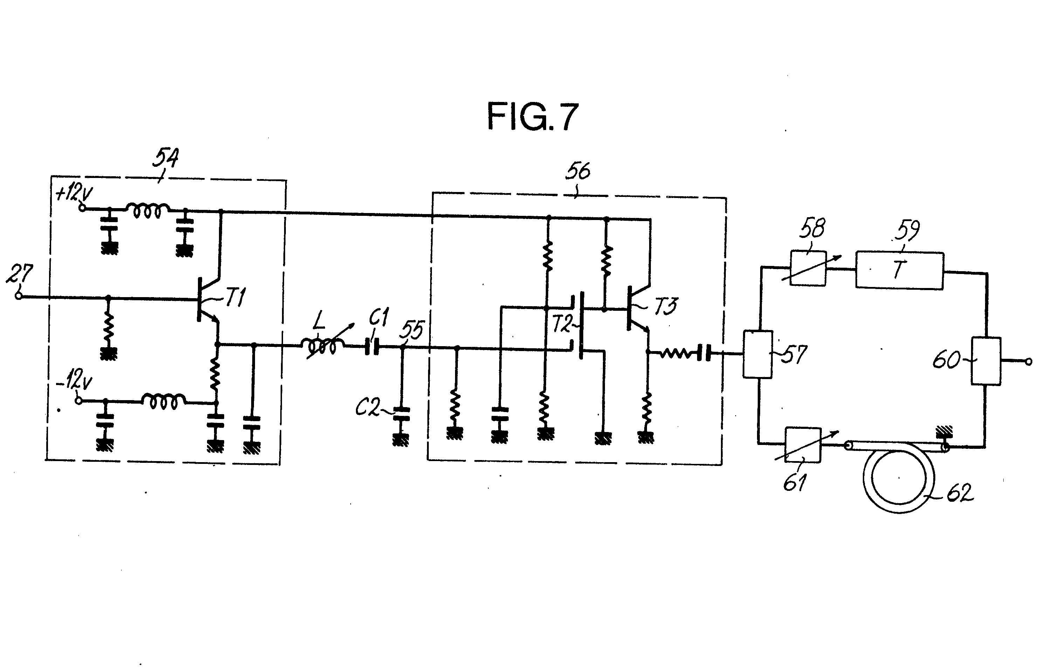

la figure 7 est le schéma d'un filtre connu monté derrière le circuit de la fig. 6 pour constituer un modulateur suivant l'invention,
la figure 8 est le schéma d'un démodulateur suivant l'invention,
la figure 9 est le diagramme de l'œil correspondant au démodulateur de la fig. 8,
la figure 10 est le schéma détaillé d'un exemple de réalisation du démodulateur de la fig. 8, et
les figures 11a à 11h sont des formes d'onde illustrant le fonctionnement du démodulateur de la fig. 10.

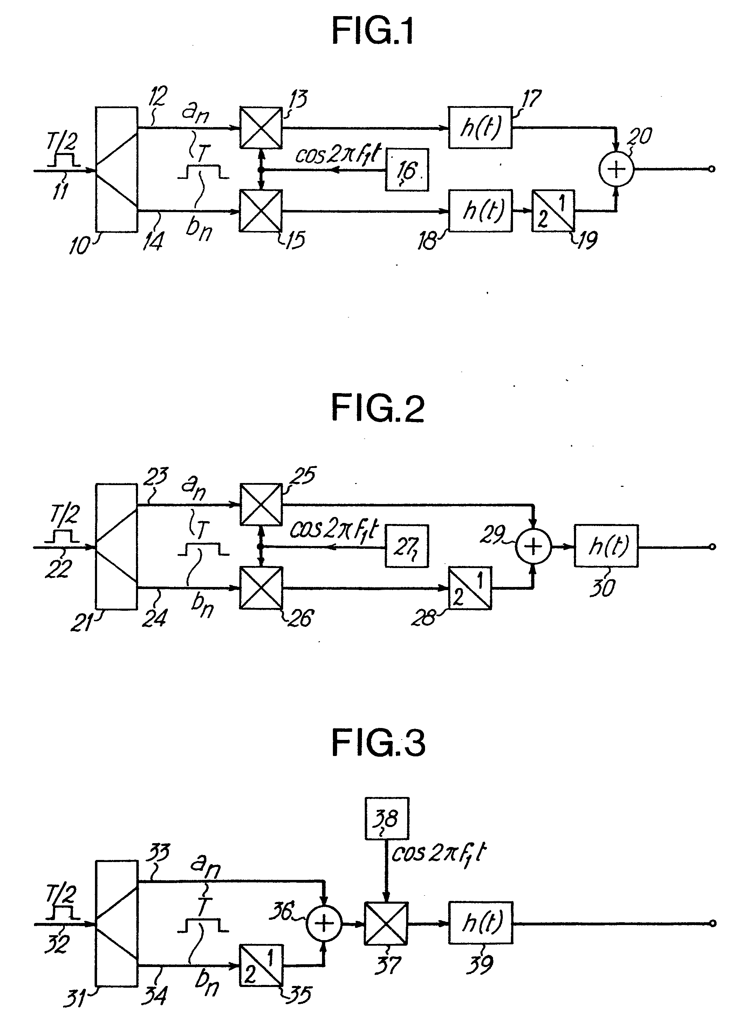

Le modulateur de la fig. 1 comprend un démultiplexeur 10, à l'entrée 11 duquel est appliqué le signal de données au rythme T/2, T étant la durée d'un symbole (deux éléments binaires). Une sortie 12 du démultiplexeur 10 est reliée à l'entrée de signal modulant d'un modulateur en anneau 13 tandis que l'autre sortie 14 de 10 est reliée à l'entrée de signal modulant d'un modulateur en anneau 15. Une source de porteuse 16 à la fréquence $f_1$ est respectivement reliée aux entrées de porteuses des modulateurs en anneau 13 et 15. La sortie du modulateur 13 est reliée à l'entrée d'un filtre 17 ayant une réponse h(t) et la sortie du modulateur 15 est reliée à l'entrée d'un filtre 18 ayant une réponse h(t). La sortie du filtre 18 est reliée à l'entrée d'un atténuateur 19 apportant une atténuation de 6 dB. La sortie du filtre 17 et celle de l'atténuateur 19 sont respectivement reliées aux deux entrées d'un additionneur 20 qui délivre le signal MAMSK.

Dans le modulateur de la fig. 1, les sorties 12 et 14 du démultiplexeur 10 délivrent respectivement les signaux $a_n$ et $b_n$ de durée T. Les modulateurs 13 et 15 effectuent respectivement les produits des signaux $a_n$ et $b_n$ par la porteuse. Les signaux modulés obtenus dans 13 et 15 sont respectivement appliqués aux filtres 17 et 18. Le signal modulé par $b_n$ subit une atténuation de 6 dB avant d'être ajouté dans 20 au signal modulé par $a_n$.

Il apparaît que le modulateur de la fig. 1 fournit bien un signal conforme aux expressions (2) à (4).

Le modulateur de la fig. 2, qui est une variante de celui de la fig. 1, comprend un démultiplexeur 21, à l'entrée 22 duquel est appliqué le signal de données au rythme T/2. Les sorties 23 et 24 du démultiplexeur 21 sont respectivement reliées aux entrées de signal modulant de deux modulateurs en anneau 25 et 26, dont les entrées de porteuses sont reliées à la sortie d'une source de porteuse 27 de fréquence $f_1$. La sortie du modulateur 26 est reliée à l'entrée d'un atténuateur 28 apportant une atténuation de 6 dB. Les sorties du modulateur 25 et de l'atténuateur 28 sont respectivement reliées aux entrées d'un additionneur 29 dont la sortie est reliée à l'entrée d'un filtre unique 30 ayant une réponse h(t) et délivrant le signal MAMSK.

Bien entendu le fonctionnement des circuits 21, 25, 26, 28 et 29 est le même que celui des circuits 10, 13, 15, 19 et 20 du modulateur de la fig. 1. Un seul filtre 30 est utilisé au lieu des deux filtres 17 et 18. En effet, les propriétés linéaires d'un filtre de réponse h(t) permettent d'obtenir directement le signal $V_s(t)$ par le produit de convolution suivant :

$$V_s(t) = \sum_{n=-\infty}^{+\infty} (a_n + 1/2\, b_n)\, R_1(t - nT)\cos 2\,\pi f_1\, t \times h(t) \qquad (5)$$

soit encore :

$$V_s(t) = A \sum_{k=-\infty}^{+\infty} (a_{2k} + 1/2\, b_{2k})\, R_2(t - 2\,kT)\sin\frac{\pi t}{2\,T}\sin(2\,\pi f_c\, t + \psi)\ \oplus$$

$$\oplus\ (a_{2k-1} + 1/2\, b_{2k-1})\, R_2(t - (2\,k - 1)\,T)\cos\frac{\pi t}{2\,T}\cos(2\,\pi f_c\, t + \psi)\,. \qquad (6)$$

Le modulateur de la fig. 3 est une variante des modulateurs des fig. 1 et 2. Il comprend un démultiplexeur 31, à l'entrée 32 duquel est appliqué le signal de données au rythme T/2. Les sorties 33 et 34 de 31 sont respectivement reliées, directement et par l'intermédiaire d'un atténuateur 35, aux deux entrées d'un additionneur 36 dont la sortie est reliée à l'entrée de signal modulant d'un unique modulateur en anneau 37. L'entrée de porteuse du modulateur 37 est reliée à la sortie d'une source de porteuse 38 à fréquence $f_1$ et la sortie du modulateur est reliée à l'entrée d'un filtre unique 39 de réponse h(t) qui délivre le signal MAMSK. L'atténuateur 35 apporte une atténuation de 6 dB.

Les sorties du démultiplexeur 31 délivrent respectivement les signaux $a_n$ et $b_n$ de durée T, l'atténuateur 35 délivre le signal $b_n/2$, l'additionneur 36 délivre le signal $(a_n + b_n/2)$. A la sortie du filtre 39, on a donc bien le signal correspondant à l'expression (7).

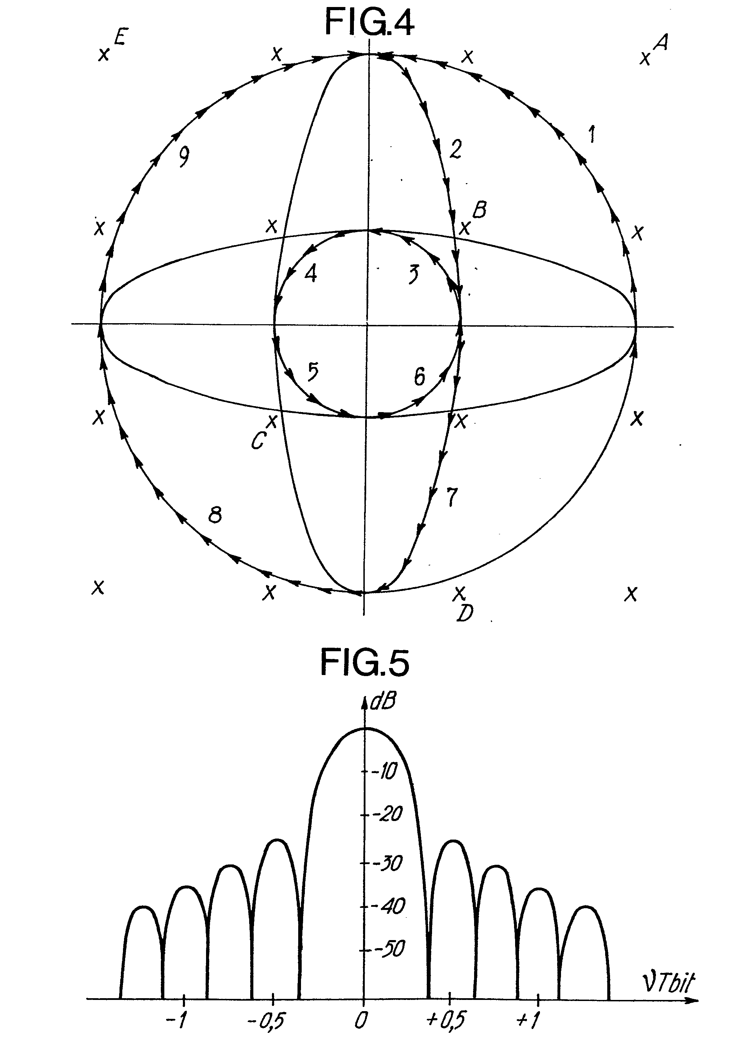

Comme le montre le diagramme polaire de la fig. 4, selon les valeurs de $a_n$ et $b_n$, les lignes décrites, pendant chaque durée T, par le signal sont soit des arcs de cercle, soit des arcs d'ellipse. Les coordonnées correspondant à un état sont transmises dans un intervalle de temps égal à 2T ce qui correspond bien à la transmission de quatre éléments binaires de durée T/2 par état.

Il faut noter que le décalage des trains conduit à une vitesse apparente de modulation deux fois plus élevée. En contrepartie, il n'y a pas annulation de la porteuse, ce qui constitue un avantage important lors de l'amplification du signal dans la chaîne de transmission.

A la fig. 4, on a indiqué la séquence des lignes « 1 » à « 9 » décrites par le signal qui correspond à la transmission successive des états suivants :

| | | | |
|---|---|---|---|
| A | 1 111 | | « x » + « 1 » |
| B | 1 010 | | « 2 » + « 3 » |
| C | 0 101 | | « 4 » + « 5 » |
| D | 1 000 | | « 6 » + « 7 » |
| E | 0 011 | | « 8 » + « 9 » |

Le calcul de la densité spectrale du signal se déduit de la modulation MSK simplifiée, ce qui conduit à l'expression suivante :

$$\gamma_1(v) = \frac{\sin 2\pi vT}{4\,\pi^4\, T^3} \times \frac{(f_1^2\, f_2^2 + v^4)\sin^2\theta\cos^2\theta + f_1^2\, v^2\cos^4\theta + f_2^2\, v^2\sin^4\theta}{(f_2^2 - v^2)^2\,(f_1^2 - v^2)^2}\,.$$

Dans le cas où il n'y a plus de cohérence de phase entre les signaux et si N est grand devant l'unité, cette densité devient :

$$\gamma_2(v) = \frac{8\,T}{2} \times \frac{1 + \cos^4\pi vT}{(1 - 16\,T^2\, v^2)^2} \otimes \frac{\delta(v - f_0) + \delta(v + f_0)}{2}\,.$$

Le diagramme de la fig. 5 montre l'encombrement spectral correspondant. On notera que l'expression de cette densité spectrale s'obtient par addition de densités spectrales des signaux MSK obtenus sur chacune des voies, comme on peut le voir à la fig. 1, et donc que l'encombrement spectral est, pour un débit donné, réduit de moitié par rapport à celui de la modulation MSK.

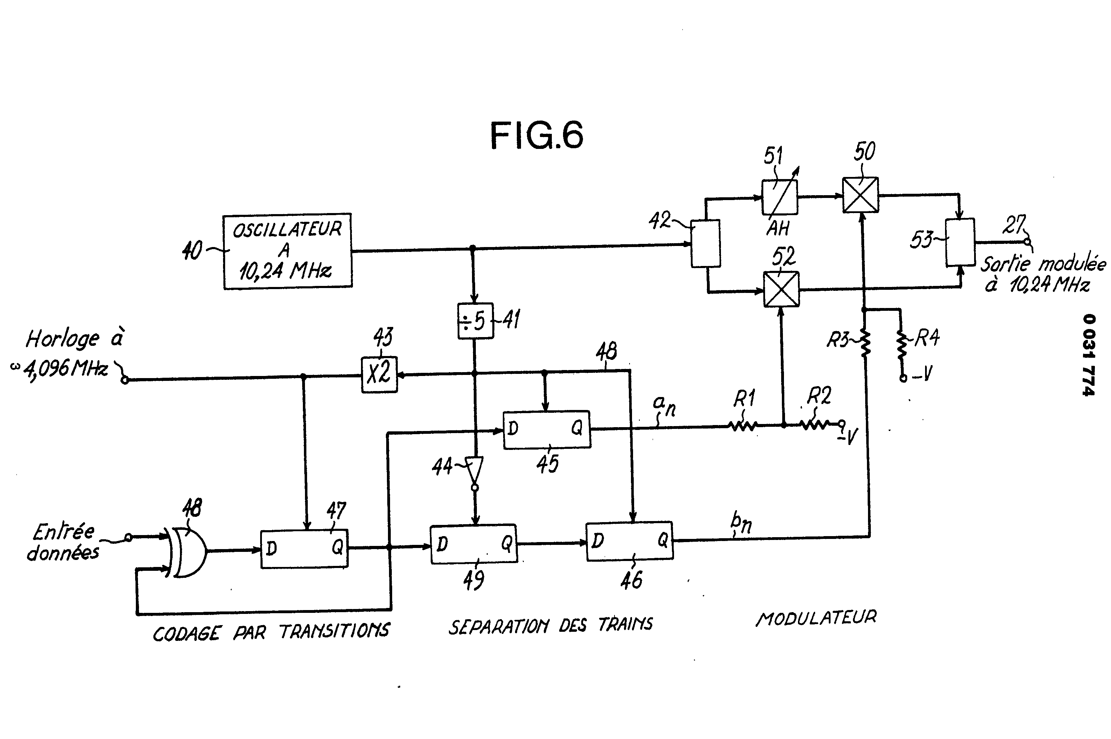

Le modulateur à quatre états d'amplitude de la fig. 6 comprend un oscillateur à quartz 40, qui délivre la fréquence porteuse $f_1$, dont la sortie est reliée, d'une part à l'entrée d'un diviseur-par-cinq 41 et, d'autre

**0 031 774**

part à l'entrée d'un diviseur de puissance 42. La sortie du diviseur 41 est reliée en parallèle à l'entrée d'un multiplicateur-par-deux 43, d'un inverseur 44, et aux entrées d'horloge de deux bascules D45 et 46. La sortie du multiplicateur 43 est reliée à l'entrée d'horloge d'une bascule D47. L'entrée D de la bascule 47 est reliée à la sortie d'une porte OU exclusif 48 dont une entrée est reliée à l'entrée des données et dont l'autre entrée est reliée à la sortie Q de la bascule 47. La sortie de l'inverseur 44 est reliée à l'entrée d'horloge d'une bascule D 49. La sortie Q de la bascule 47 est reliée, d'une part, à l'entrée D de la bascule 45 et, d'autre part, à l'entrée D de la bascule 49, dont la sortie Q est reliée à l'entrée D de la bascule 46.

Les sorties du diviseur de puissance 42 sont respectivement reliées à une entrée de porteuse d'un modulateur en anneau 50, par l'intermédiaire d'un atténuateur variable 51, et directement à une entrée de porteuse d'un modulateur en anneau 52. La sortie Q de la bascule 45 est reliée à une source de tension − V par deux résistances R1 et R2 en série, ces résistances constituants un diviseur de tension. De même, la sortie Q de la bascule 46 est reliée à une source de tension − V par deux résistances R3 et R4 en série. Le point commun aux résistances R1 et R2 est relié à l'entrée de signal modulant du modulateur en anneau 52. Le point commun aux résistances R3 et R4 est relié à l'entrée de signal modulant du modulateur en anneau 50. Les sorties des modulateurs en anneau 50 et 52 sont respectivement reliées aux deux entrées d'un coupleur à 3 dB 53 dont la sortie délivre un signal modulé à 10,24 MHz.

La porte OU exclusif 48 et la bascule 47 constituent ensemble un codeur par transition. L'ensemble des bascules 45, 46 et 49 constituent, avec l'inverseur 44, un séparateur de trains pair et impair qui délivre les trains $a_n$ et $b_n$. Le diviseur de fréquence 41 délivre un signal à 2,048 MHz et le multiplicateur de fréquence 43 un signal à 4,096 MHz.

Les signaux délivrés par 53 sous une impédance d'entrée de 50 ohms sont transmis à un circuit adaptateur d'impédance 54 qui a pour rôle d'abaisser l'impédance de sortie du circuit adaptateur à une valeur très faible. Ceci est obtenu par un transistor T1 portant la référence 2N222, dont les circuits de polarisation sont classiques et ne nécessitent pas de description détaillée. L'émetteur de T1 délivrant le signal de sortie est relié à l'inductance L en série avec les condensateurs C1 et C2. L'inductance L a pour valeur 2,5 micro henrys, la capacité de C1 pour valeur 100 picofarads et celle de C2 pour valeur 1 000 picofarads. Le point 55 entre C1 et C2 est relié à une grille d'un transistor à effet de champ T2, portant la référence MEM630, dont le drain est relié à la base d'un transistor T3, portant la référence 2N222, fonctionnant en abaisseur d'impédance. En pratique, l'ensemble des transistors T2 et T3 avec leurs circuits de polarisations forment l'amplificateur 56. L'impédance d'entrée de 56 est celle du transistor à effet de champ, c'est-à-dire très élevée. Le transistor de sortie T3 permet d'avoir, pour 56, une impédance de sortie de 50 ohms. L'émetteur de T3 est relié à l'entrée d'un circuit diviseur de puissance à large bande 57, portant la référence commerciale PSC2-1, qui divise la puissance qui lui est appliquée en deux parties égales sur ces deux sorties. Une sortie de 57 est reliée à un atténuateur variable 58 en série avec une ligne à retard 59 dont la sortie est reliée à une entrée d'un coupleur à 3 dB 60, fonctionnant en additionneur arithmétique. L'autre sortie de 57 alimente un autre atténuateur variable 61 dont la sortie est reliée à une extrémité d'un câble coaxial 62 dont l'autre extrémité est reliée à la seconde entrée du coupleur 60. Le coupleur 60 porte la référence commerciale PSC2-1. Sa sortie délivre le signal modulé. Son impédance de sortie est de 50 ohms.

En principe, le circuit 59 a un retard de 488 nanosecondes correspondant à la durée d'un élément binaire. En pratique on utilise une ligne à retard du commerce dont le retard est égal à 500 nanosecondes. C'est pourquoi, sur l'autre branche, un court câble 62 apporte un retard de 12 nanosecondes. Sa longueur est ajustée pour obtenir, entre les deux branches, le retard convenable. De même, deux atténuateurs 58 et 61 facilitent le réglage, mais un seul atténuateur peut suffire.

Le filtre théorique non réalisable en pratique car demandant un circuit LC de coefficient de surtension infini donne toutefois, avec un coefficient de surtension Q fini, un gain complexe $H_e(V)$, avec une très bonne approximation si un facteur d'atténuation K est placé dans la branche retardée du filtre en peigne.

Dans ce cas, le gain complexe $H_{e_1}(V)$ s'écrit :

$$H_{e_1}(V) = \frac{1}{1 - \left(\dfrac{2\,TV}{N+1}\right)^2 + \dfrac{1}{Q}\dfrac{2\,TV}{N+1}} [1 + (-1)^N \, k \, e^{-i2\pi VT}]$$

$$\text{avec } K = \exp\left[-\pi\,\frac{N+1}{2\,Q}\right].$$

Le rapport de transformation du diviseur capacitif constitué par $C_1$ et $C_2$ a été déterminé expérimentalement pour obtenir un coefficient Q = 60.

On obtient en sortie du filtre h(t) le signal modulé en MAMSK de fréquence centrale égale à $f_c$ = 10,75 MHz.

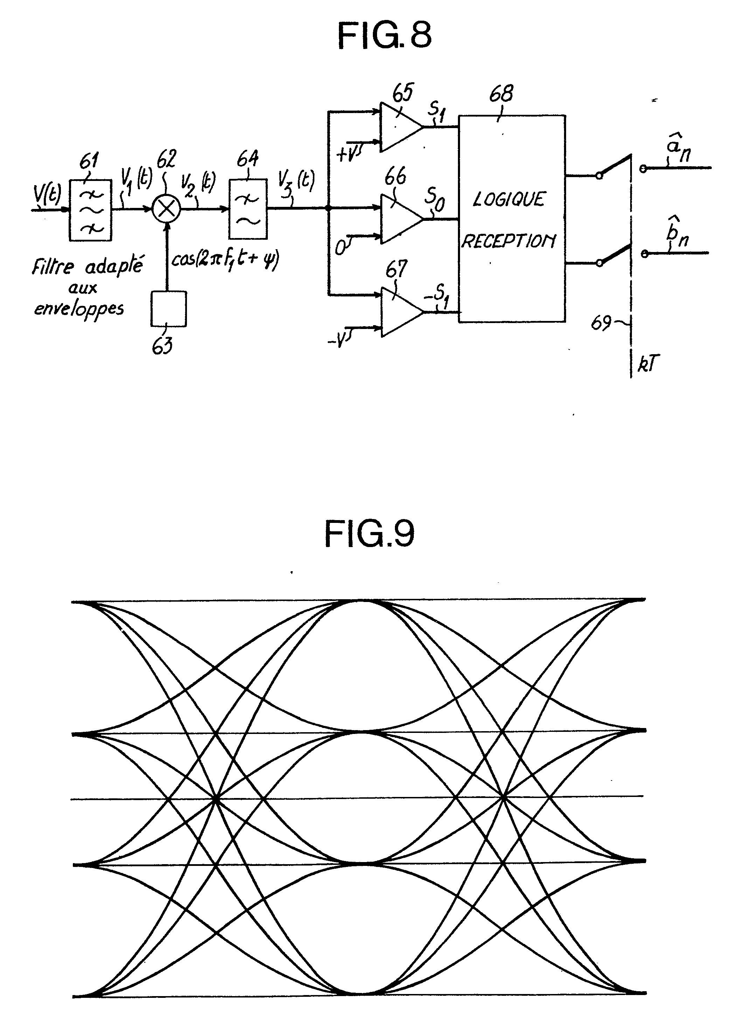

Le démodulateur de la Fig. 8 comprend un filtre 61 à l'entrée duquel est appliqué le signal modulé et dont la sortie est reliée à une entrée d'un multiplicateur 62. La seconde entrée du multiplicateur 62 est reliée à la sortie d'une source 63 de fréquence $f_1$. La sortie de 62 est reliée à l'entrée d'un filtre passe-bas

5

**0 031 774**

64 dont la sortie est reliée, en parallèle , aux premières entrées de trois amplificateurs différentiels 65 à 67. La seconde entrée de l'amplificateur 65 est reliée à une source de tension + V, celle de l'amplificateur 66 à une source de tension 0 et celle de l'amplificateur 67 à une source de tension − V. Les sorties des amplificateurs 65 à 67 sont respectivement reliées aux entrées correspondantes d'un circuit logique de réception 68, lequel comporte deux sorties délivrant respectivement les signaux $\hat{a}_n$ et $\hat{b}_n$. Les sorties de 68 sont échantillonnées au rythme kT par un échantillonneur 69, représenté symboliquement. Le multiplicateur 62 est un modulateur en anneau.

En fait, la démodulation est obtenue en effectuant le produit du signal modulé $V_s(t)$ et de la porteuse $\cos (2 \pi f_1 t + \psi)$. A la sortie du multiplicateur 62, on a pour $t \in [(2k+1)T, (2k+2)T]$ :

$$V_2(t) = A(a_2 k + 1/2 b_2 k) \sin \frac{\pi t}{2T} \sin (2 \pi f_c t + \psi) \cos (2 \pi f_1 t + \psi) +$$

$$+ A(a_{2k-1} + 1/2 b_{2k-1}) \cos \frac{\pi t}{2T} \cos (2 \pi f_c t + \psi) \cos (2 \pi f_1 t + \psi)$$

ou

$$V_2(t) = A/2(a_{2k} + 1/2 b_{2k}) \left[ \sin \frac{2 \pi t}{2T} + \sin \frac{\pi t}{2T} \sin 2 \pi (f_c + f_1) t \right] +$$

$$+ A/2(a_{2k-1} + 1/2 b_{2k-1}) \left[ \cos \frac{2 \pi t}{2T} + \cos \frac{\pi t}{2T} \cos 2 \pi (f_c + f_1) t \right].$$

Après élimination des composantes hautes fréquences dans le filtre passe-bas 64, la sortie de 64 délivre le signal :

$$V_3(t) = A/2(a_{2k} + 1/2 b_{2k}) \sin^2 \frac{\pi t}{2T} + A/2(a_{2k+1} + 1/2 b_{2k+1}) \cos^2 \frac{\pi t}{2T}.$$

A chaque instant kT, la décision s'effectue par comparaison à trois seuils + V, O et − V dans les trois amplificateurs différentiels 65 à 67, des quatre niveaux possibles qui sont :

$$-\frac{3A}{4}, \quad -\frac{A}{4}, \quad \frac{A}{4} \quad \text{et} \quad \frac{3A}{4}.$$

La Fig. 9 indique le diagramme de l'œil correspondant au procédé de démodulation.

Les amplificateurs différentiels 65, 66 et 67 délivrent respectivement les signaux $S_1$, $S_0$ et $S_{-1}$ qui sont combinés dans le circuit 68.

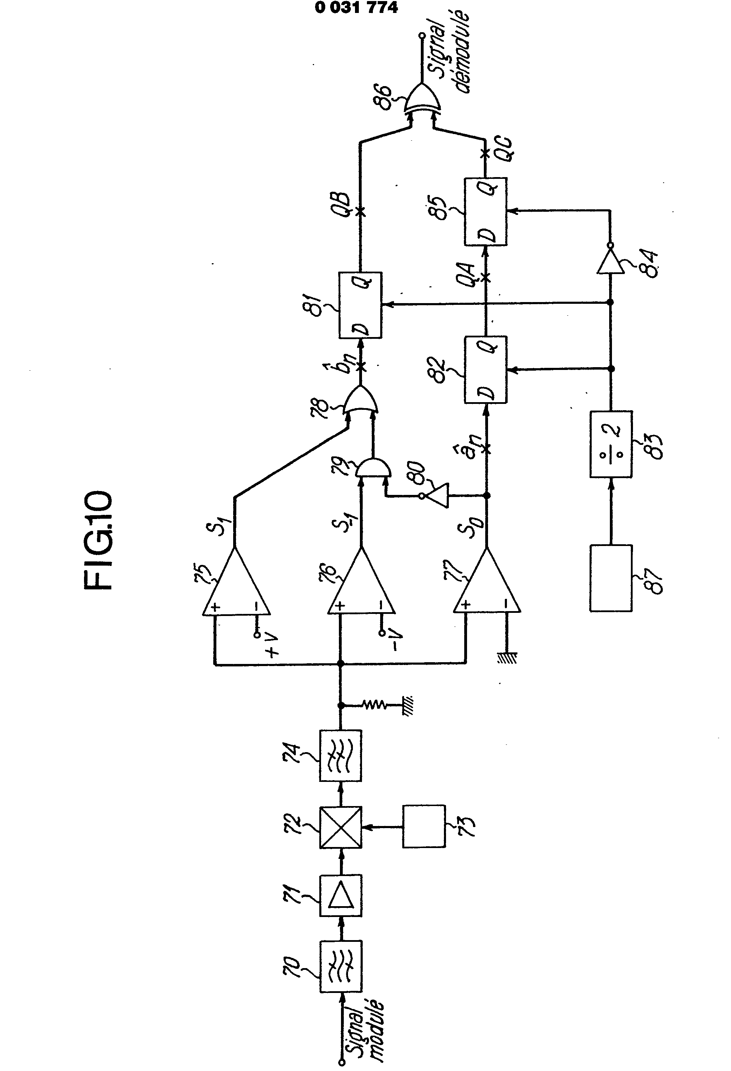

La Fig. 10 montre un schéma d'un démodulateur semblable à celui de la Fig. 8. L'entrée de signal modulé est reliée à l'entrée d'un filtre d'enveloppe 70 qui est de préférence un filtre gaussien jusqu'à − 6 dB, à trois pôles et accordé à la fréquence de 10,76 MHz. Un tel filtre permet d'approcher au mieux les performances théoriques en modulation MSK car il est très proche du filtre adapté aux enveloppes du signal.

La sortie du filtre 70 est reliée à l'entrée d'un amplificateur 71 dont la sortie est reliée à l'entrée de modulation d'un modulateur en anneau 72 dont l'entrée de porteuse est reliée à la sortie d'un circuit de récupération de porteuse 73 de fréquence $f_1 = 10,24$ MHz. La sortie de 72 est reliée à l'entrée du filtre passe-bas 74 qui élimine les produits parasites de la démodulation. La sortie de 74 est reliée, en parallèle, aux entrées + de trois amplificateurs différentiels 75, 76 et 77, qui fonctionnent en comparateur. L'entrée − de 75 est reliée à une source de tension + V, l'entrée − de 76 à une source de tension − V, et l'entrée − de 77 à la masse. Les amplificateurs 75, 76 et 77 délivrent respectivement les signaux $S_1$, $S_{-1}$ et $S_0$.

La sortie de 75 est reliée à une entrée d'une porte OU 78. La sortie de 76 est reliée à une entrée d'une porte ET 79 tandis que la sortie de 77 est reliée à l'autre entrée de 79, par l'intermédiaire d'un inverseur 80. La sortie de la porte ET 79 est reliée à la seconde entrée de la porte OU 78. La sortie de 78 est reliée à l'entrée D d'une bascule D 81. La sortie de 77 est encore reliée à l'entrée D d'une bascule D 82.

Par ailleurs, le circuit de récupération d'horloge 87 à 4,096 MHz est relié à l'entrée d'un diviseur-par-deux de fréquence 83 dont la sortie délivrant un signal à 2,048 MHz est reliée aux entrées d'horloge des bascules 81, ainsi qu'à l'entrée d'un inverseur 84 dont la sortie est reliée à l'entrée d'horloge d'une bascule D 85. La sortie Q de la bascule 81 est reliée à une entrée d'une porte OU exclusif 86. La sortie Q de la bascule 82 est reliée à l'entrée D de la bascule 85 dont la sortie Q est reliée à la seconde entrée de la porte OU exclusif 86. La sortie de la porte 86 délivre le signal démodulé.

L'ensemble des circuits 78 à 86 constitue un décodeur qui regroupe les circuits 68 et 69 de la Fig. 9. La fonction de décodage, essentielle à la démodulation, correspond à la règle suivante : $a_n = \pm 1$, si l'élément binaire correspondant vaut respectivement « un » ou « zéro », et il en est de même pour $b_n$.

Les comparateurs 75, 77 et 76 déterminent, par les trois seuils + V, O et − V, où V = A/2, quatre niveaux

6

possibles 3A/4, A/4, − A/4 et − 3A/4. Le traitement logique pour récupérer les signaux $\hat{a}_n$ et $\hat{b}_n$ à 2,048 Mbit/s correspond au tableau des états donné ci-dessous :

| Niveau du signal démodulé | $S_{-1}$ | $S_0$ | $S_1$ | $\hat{a}_n$ | $\hat{b}_n$ |
|---|---|---|---|---|---|
| 3A/8 | 1 | 1 | 1 | 1 | 1 |
| A/8 | 1 | 1 | 0 | 1 | 0 |
| −A/8 | 1 | 0 | 0 | 0 | 1 |
| −3A/8 | 0 | 0 | 0 | 0 | 0 |

Les équations logiques correspondantes sont les suivantes :

$$\hat{a}_n = S_0$$
$$\hat{b}_n = S_1 + (S_{-1} . \overline{S}_0) .$$

La fonction d'échantillonnage est réalisée, sur chaque voie $\hat{a}_n$ et $\hat{b}_n$, à l'aide des deux bascules 81 et 82. Le signal présent à l'entrée D de chaque bascule 81 et 82 est transféré à la sortie Q correspondante lorsque d'un front montant du signal d'horloge délivré par le diviseur 83 est appliqué. Le front montant doit être positionné au milieu du signal de données pour minimiser la probabilité d'erreur en présence de bruit.

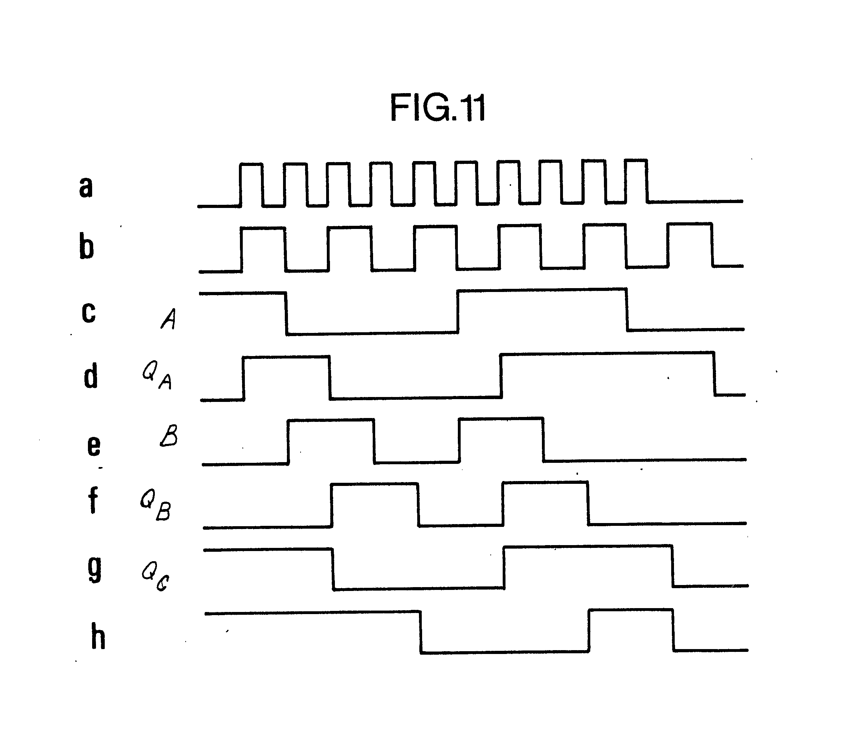

La forme d'onde 11a correspond au signal d'entrée de 83 à 4,096 MHz. La forme d'onde de la Fig. 11b correspond au signal de sortie de 83 à 2,048 MHz. La forme d'onde 11c illustre un signal $\hat{a}_n$ délivré par le comparateur 77. La forme d'onde 11d illustre le signal $Q_A$ à la sortie Q de la bascule 82. La forme d'onde 11e illustre un signal $\hat{b}_n$ délivré par la porte OU 78. La forme d'onde 11f illustre le signal $Q_B$ délivré par la sortie Q de la bascule 81.

La bascule 85 permet de déphaser le train $\hat{a}_n$ de T/2 par rapport au train $\hat{b}_n$. La Fig. 11g illustre le signal $Q_C$ délivré par la sortie Q de 85.

Enfin, la Fig. 11h illustre le train d'éléments binaires récupéré à la sortie de la porte OU exclusif 86.

Dans des essais d'utilisation d'un modulateur suivant l'invention afin de mesurer les performances, on a utilisé un signal binaire constitué par une séquence pseudo-aléatoire de $(2^{20} − 1)$ éléments binaires. On a ajouté au signal MAMSK entre le modulateur et le démodulateur un bruit gaussien à large bande. La puissance de la porteuse et la densité spectrale du bruit ont été mesurées à l'entrée du filtre de réception. Les résultats des mesures donnant le taux d'erreur en fonction du rapport $E/N_0$, qui correspond à l'énergie moyenne par élément binaire sur la densité spectrale monolatérale du bruit à l'entrée du démodulateur, ont été obtenus pour différents filtres de réception. Pour éliminer l'effet du codage par transition, on a divisé le taux d'erreur par deux ce qui permet une comparaison directe avec les résultats théoriques.

Les résultats de mesure obtenus montrent que, pour un taux d'erreur égal à $10^{-5}$, la dégradation par rapport à la valeur théorique est équivalente à une perte de 1,3 dB sur le rapport $E/N_0$, lorsque le filtre utilisé est un filtre gaussien à trois pôles et de largeur de bande de 1,3 MHz à 3dB, soit un produit — bande x durée élément binaire — égal à 0,32. Pour un filtrage plus étroit, la dégradation augmente rapidement ce qui indique une sensibilité plus importante à l'intermodulation intersymbole que pour la modulation MSK.

On peut calculer que la probabilité d'erreur moyenne par élément binaire $P_e$ est, avec code de Gray :

$$P_e \,\#\, \frac{3}{8} \, \mathrm{erf}_c \sqrt{\frac{2\,E}{5\,N_0}} .$$

Cette probabilité d'erreur peut encore être exprimée en fonction de l'énergie crête émise par élément binaire $E_c$, soit :

$$E_c = \frac{9\,A^2\,T}{16}$$

d'où :

$$P_e = \frac{3}{8} \, \mathrm{erf}_c \sqrt{\frac{2\,E_c}{9\,N_0}} .$$

# 0 031 774

Si l'on tient compte de ce que, pour une modulation à deux ou quatre états de phase, on a

$$P_e = 1/2 \, \mathrm{erf}_c \sqrt{\frac{E}{N_0}}$$

il apparaît que la perte vis-à-vis du bruit est donc de 4 dB pour l'énergie moyenne émise par élément binaire et de 6,5 dB pour l'énergie crête émise par élément binaire.

**Revendications**

1. Procédé de modulation à seize états d'un train d'éléments binaires de débit 1/T du type MAMSK caractérisé en ce que l'on ajoute ensemble deux modulations MSK d'amplitudes respectives A et A/2, soit :

$$A \sum_{k=-\infty}^{+\infty} a_{2k} \, R_2(t - 2 \, kT) \sin \frac{\pi t}{2T} \sin (2 \, \pi f_c \, t + \psi) + a_{2k-1} \, R_2(t - (2 \, k - 1) \, T) \cos \frac{\pi t}{2T} \cos (2 \, \pi f_c \, t + \psi)$$

et

$$A/2 \sum_{k=-\infty}^{+\infty} b_{2k} \, R_2(t - 2 \, kT) \sin \frac{\pi t}{2T} \sin (2 \, \pi f_c \, t + \psi) +$$

$$+ b_{2k-1} \, R_2(t - (2 \, k - 1) \, T) \cos \frac{\pi t}{2T} \cos (2 \, \pi f_c \, t + \psi)$$

avec :
$R_2(t) = 1$, si $t \in [- T, T]$ .
$R_2(t) = 0$, si $t \notin [- T, T]$
$2T$ = durée d'un symbole (quatre bits)
$a_n$ et $b_n$ pouvant prendre les valeurs $\pm 1$
$f_c$ = fréquence porteuse
$\psi$ = phase à l'origine de la porteuse,
chacune de ces modulations MSK étant obtenue par filtrage linéaire d'une modulation à deux états de phase de fréquence f1, telle que :

$$f1 = f_c - 1/4 \, T$$

le filtre ayant pour réponse impulsionnelle une sinusoïde de fréquence f2, telle que :

$$f2 = f_c + 1/4 \, T$$

dans l'intervalle O,T.

2. Modulateur mettant en œuvre le procédé de modulation suivant la revendication 1, caractérisé en ce qu'il comprend un démultiplexeur (10) à l'entrée duquel est appliqué le train des éléments binaires à transmettre, les deux sorties dudit démultiplexeur (10) étant respectivement reliées aux entrées de modulation de deux modulateurs en anneau (13, 15) dont les entrées de porteuses sont reliées à la sortie d'une source de porteuse (16), les sorties des modulateurs en anneau (13, 15) étant respectivement reliées aux entrées de deux filtres linéaires (17, 18), conforme à la revendication 1, la sortie de l'un (17) desdits filtres linéaires étant reliée à une entrée d'un additionneur (20) tandis que la sortie de l'autre filtre linéaire (18) est reliée à l'autre entrée de l'additionneur (20) par l'intermédiaire d'un diviseur par deux d'amplitude (19), la sortie dudit additionneur (20) délivrant le signal modulé.

3. Modulateur suivant la revendication 2, caractérisé en ce que les filtres linéaires reliés aux sorties des deux modulateurs en anneau (25, 26) sont supprimés, la sortie dudit additionneur (29) étant reliée à l'entrée d'un filtre linéaire unique (30) conforme à la revendication 1 qui délivre le signal modulé.

4. Modulateur suivant la revendication 3, caractérisé en ce que lesdits modulateurs en anneau reliés aux sorties dudit démultiplexeur (33) sont supprimés, la sortie dudit additionneur (36) étant reliée à l'entrée de modulation d'un modulateur en anneau unique (37), dont l'entrée de porteuse est reliée à la sortie d'une source de porteuse (38) et dont la sortie est reliée audit filtre linéaire unique (39).

5. Démodulateur capable de recevoir un signal transmis par un modulateur suivant l'une des revendications 2 à 4, caractérisé en ce qu'il comprend un filtre d'enveloppe (61) à l'entrée duquel est appliqué le signal modulé et dont la sortie est reliée à l'entrée de signal d'un modulateur en anneau (62) dont l'entrée de porteuse est reliée à une source de fréquence f1 (63), la sortie du modulateur en anneau

8

(62) étant reliée, à travers un filtre passe-bas (64), à l'entrée d'un circuit de comparaison (65, 66, 67) à trois seuils (+ V, O, − V) définissant quatre niveaux possibles, les sorties du circuit de comparaison (65, 66, 67) étant reliées à un décodeur (68) délivrant le train reconstitué des éléments binaires.

**Claims**

1. A sixteen-signal-condition MAMSK-type modulation process for modulating a bit train having a rate 1/T characterized in that two amplitude MSK modulations are together added which respectively have an amplitude value A and an amplitude value A/2, i. e. :

$$A \sum_{k = -\infty}^{+\infty} a_{2k} R_2(t - 2kT) \sin\frac{\pi t}{2T} \sin(2\pi f_c t + \psi) + a_{2k-1} R_2(t - (2k - 1)T) \cos\frac{\pi t}{2T} \cos(2\pi f_c t + \psi)$$

and

$$A/2 \sum_{k = -\infty}^{+\infty} b_{2k} R_2(t - 2kT) \sin\frac{\pi t}{2T} \sin(2\pi f_c t + \psi) +$$

$$+ b_{2k-1} R_2(t - (2k - 1)T) \cos\frac{\pi t}{2T} \cos(2\pi f_c t + \psi)$$

with :
  $R_2(t) = 1$, when $t \in [-T, T]$
  $R_2(t) = 0$, when $t \notin [-T, T]$
  $2T = $ (four bits) symbol duration
  $a_n$ and $b_n$ being either $\pm 1$
  $f_c = $ carrier frequency
  $\psi = $ phase at carrier origin,
each of said MSK modulations being obtained by linear filtering of a two-signal-condition phase modulation of frequency f1, such that :

$$f1 = f_c - 1/4T$$

the filter pulse response being a sine wave of frequency f2, such that :

$$f2 = f_c + 1/4T$$

within the time interval O,T.

2. A modulator for implementing the modulation process according to claim 1, characterized in that it comprises a demultiplexer (10) having an input which the bit train to be transmitted is applied to, the two ouputs of said demultiplexer (10) being respectively connected to the modulation inputs of two ring modulators (13, 15) having carrier inputs connected from the output of a carrier source (16), the outputs of ring modulators (13, 15) being respectively connected to the inputs of two linear filters (17, 18), according to claim 1, the output of one (17) of said linear filters being connected to one input of adder (20) while the output of the other linear filter (18) is connected to the other input of the adder (20) through an amplitude divider-by-two (19), the output of said adder (20) delivering the modulated signal.

3. A modulator according to claim 2, characterized in that the linear filters connected from outputs of the two ring modulators (25, 26) are suppressed, the output of said adder (29) being connected to the input of a single linear filter (30) according to claim 1 which delivers the modulated signal.

4. A modulator according to claim 3, characterized in that the said ring modulators connected from outputs of said demultiplexer (33) are suppressed, the output of said adder (36) being connected to the modulation input of a single ring modulator (37), having a carrier input connected from output of a carrier source (38) and an output connected to said single linear filter (39).

5. A demodulator for receiving a signal transmitted from a modulator according to one of claims 2-4, characterized in that it comprises an envelope filter (61) having an input which the modulated signal is applied to and an output which is connected to the signal input of a ring modulator (62) having a carrier input connected from a carrier source f1 (63), the output of ring modulator (62) being connected, through a low-pass filter (64), to the input of a comparison circuit (65, 66, 67) having three thresholds (+V, O, −V) defining four possible levels, the outputs of the comparison circuit (65, 66, 67) being connected to a decoder (68) delivering the rebuilt bit train.

**Patentansprüche**

1. Sechzehn-stufiges MAMSK-Modulationsverfahren für eine Folge von Binärelementen mit der Rate 1/T, dadurch gekennzeichnet, daß man zwei Amplituden MSK-Modulationen jeweils mit A und A/2 zusammenaddiert, d. h. :

$$A \sum_{k=-\infty}^{+\infty} a_{2k} R_2(t - 2kT) \sin\frac{\pi t}{2T} \sin(2\pi f_c t + \psi) + a_{2k-1} R_2(t - (2k-1)T) \cos\frac{\pi t}{2T} \cos(2\pi f_c t + \psi)$$

und

$$A/2 \sum_{k=-\infty}^{+\infty} b_{2k} R_2(t - 2kT) \sin\frac{\pi t}{2T} \sin(2\pi f_c t + \psi) +$$

$$+ b_{2k-1} R_2(t - (2k-1)T) \cos\frac{\pi t}{2T} \cos(2\pi f_c t + \psi)$$

mit :
$R_2(t) = 1$, wenn $t \in [-T, T]$
$R_2(t) = 0$, wenn $t \notin [-T, T]$
$2T$ = Dauer eines Zeichens (vier Bits)
$a_n$ und $b_n$ können entweder die Werte $\pm 1$ haben
$f_c$ = Trägerfrequenz
$\psi$ = Phase am Trägerursprung,
man jede der MSK-Modulationen durch lineares Filtern einer zweistufigen Phasenmodulation mit der Frequenz f1 erhalten hat, wie :

$$f1 = f_c - 1/4T$$

der Filter als Impulsübergangsfunktion eine Sinuswelle mit der Frequenz f2 hat, wie :

$$f2 = f_c + 1/4T$$

im Intervall O,T.

2. Modulator zur Durchführung des Modulationsverfahrens nach Anspruch 1, dadurch gekennzeichnet, daß er einen Demultiplexer (10) aufweist, an dessen Eingang die zu übertragende Folge von Binärelementen anliegt, daß die beiden Ausgänge des Demultiplexers (10) jeweils mit den Modulationseingängen von zwei Ringmodulatoren (13, 15) verbunden sind, deren Trägereingänge mit einem Ausgang einer Trägerquelle (16) verbunden sind, daß die Ausgänge der Ringmodulatoren (13, 15) jeweils mit den Eingängen von zwei linearen Filtern (17, 18) verbunden sind, gemäß Anspruch 1, daß der Ausgang des einen linearen Filters (17) mit einem Eingang eines Addierers (20) verbunden ist, während der Ausgang des anderen linearen Filters (18) mit dem anderen Eingang des Addierers (20) über einen Amplitudendividierer (19), der durch zwei teilt, verbunden ist, und daß der Ausgang des Addierers (20) das modulierte Signal abgibt.

3. Modulator nach Anspruch 2, dadurch gekennzeichnet, daß die linearen Filter, die mit den Ausgängen der beiden Ringmodulatoren (25, 26) verbunden sind, fehlen, und daß der Ausgang des Addierers (29) mit dem Eingang eines einzigen linearen Filters (30) gemäß Anspruch 1 verbunden ist, der das modulierte Signal abgibt.

4. Modulator nach Anspruch 3, dadurch gekennzeichnet, daß die Ringmodulatoren, die mit den Ausgängen des Demultiplexers (33) verbunden sind, fehlen, und daß der Ausgang des Addierers (36) mit dem Modulationseingang eines einzigen Ringmodulators (37) verbunden ist, dessen Trägereingang mit dem Ausgang einer Trägerquelle (38) und dessen Ausgang mit dem einzigen linearen Filter (39) verbunden ist.

5. Demodulator, der ein über einen Modulator nach einem der Ansprüche 2 bis 4 übertragenes Signal empfangen kann, dadurch gekennzeichnet, daß er einen Hüllkurvenfilter (61) aufweist, an dessen Eingang das modulierte Signal anliegt und dessen Ausgang mit dem Signaleingang eines Ringmodulators (62) verbunden ist, dessen Trägereingang mit einer Quelle (63) für eine Frequenz f1 verbunden ist, daß der Ausgang des Ringmodulators (62) über einen Tiefpaßfilter (64) mit dem Eingang einer Komparatorschaltung (65, 66, 67) mit drei Schwellenwerten (+V, O, −V) verbunden ist, die vier mögliche Pegel vorgibt, und daß die Ausgänge der Komparatorschaltung (65, 66, 67) mit einem Decodierer (68) verbunden sind, der die rückgewonnene Folge von Binärelementen liefert.

10

0 031 774

FIG.1

FIG.2

FIG.3

1

# FIG.4

# FIG.5

# FIG.6

0 031 774

# FIG.7

0 031 774

# FIG.8

# FIG.9

# FIG.10

Signal modulé

70 71 72 74 73

75 $S_1$
+V
76 $S_{-1}$
-V
77 $S_0$

79 80 78 $\hat{b}_n$ 81 D Q QB
$\hat{a}_n$ 82 D Q QA 85 D Q QC

87 83 ÷ 2 84

86 Signal démodulé

0 031 774

# FIG.11

a

b

c     $A$

d     $Q_A$

e     $B$

f     $Q_B$

g     $Q_C$

h

0 031 774